(19) 

Europäisches
Patentamt
European
Patent Office
Office européen
des brevets

(11) **EP 1 817 960 A1**

(12) **EUROPEAN PATENT APPLICATION**

(43) Date of publication:
**15.08.2007 Bulletin 2007/33**

(51) Int Cl.:
*A21D 8/02* *(2006.01)*       *A21D 10/04* *(2006.01)*

(21) Application number: **05112974.0**

(22) Date of filing: **23.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Wageningen Centre for Food Sciences 6703 GW Wageningen (NL)**

(72) Inventors:
• **Lichtendonk, Willem Johannes 3972 PD, Driebergen-Rijsenburg (NL)**

• **Van Vliet, Teunis 6705 BT, Wageningen (NL)**
• **Visser, Jendo Eelke 7413 EC, Deventer (NL)**
• **Hamer, Robert Jan 3813 RS, Amersfoort (NL)**

(74) Representative: **van Westenbrugge, Andries et al Nederlandsch Octrooibureau Postbus 29720 2502 LS Den Haag (NL)**

(54) **Batter, food product having a coating comprising the batter and method of making a batter**

(57) A batter is provided comprising flour, water and optionally starch, wherein the batter comprises glutenin particles having a volume surface averaged particle size smaller than 10 $\mu$m. A batter according to the invention comprises flour and optionally starch, and optionally baking powder and salt. At least 95 vol. % of all particles comprised in the batter have a particle size of 100 $\mu$m or less. It appears that such a batter provides very crispy coatings to (deep-)fried products.

**EP 1 817 960 A1**

## Description

### Field of the invention

The present invention relates to a batter, a food product having a coating comprising the batter and a method of making a batter.

### Background of the invention

There is a continuing need for coated food products such as coated meat, poultry, vegetables, fruits and fish for frying, baking, grilling, etc. Usually, these coated food products are obtained by coating a raw or at least partly cooked, baked or fried product, optionally frozen, with a batter. This method is also known as "tempura". Subsequently, a particulate breading material may be applied to the coated product. If desired, the steps of coating and breading can be repeated to obtain a multilayered coating. Before storage, the coating may be pre-set, for instance by a pre-frying treatment.

Batter coated products are often stored at frozen conditions. For consumption, the products are heated, for instance by deep or shallow fat frying, oven baking, roasting, micro wave heating or grilling. An important prerequisite of the batter is that the fmal product after heating comprises a crispy coating. This is e.g. addressed by US 6288179, which provides a battered food product with a crisp texture, a golden brown appearance and a fresh fried taste which retain these desired characteristics even if stored for a period of time after they are fully prepared but before they are consumed. To that end, US 6288179 provides a coating of cereal-based batter containing a particular non-gelling milk protein and sodium caseinate.

### Summary of the invention

It is an object of the invention to provide an alternative batter, which when used as coating on a food product and when cooked, preferably provides a cooked food product, especially a fried or deep-fried food product, with a crispy coating. It is further an object to provide an alternative batter which is stable, preferably more stable than state of the art batters.

Overdeveloping dough is usually not desired, because an overdeveloped dough provides products, such as bread, with a bad texture. Surprisingly, it is found that a batter based on an overdeveloped dough, when used as coating on food products, advantageously provides fried or deep-fried food products ("cooked food products") with a more crispy coating than food products coated with state of the art batters. Further, the batter of the invention appears to be more stable than state of the art batters.

Thus, according to an aspect of the invention, a batter is provided, the batter comprising flour, water and optionally starch, wherein the batter comprises glutenin particles having a volume surface averaged particle size smaller than 10 $\mu$m.

In yet a further aspect of the invention, there is provided a batter comprising flour, water and optionally starch, having a particle size distribution wherein at least 95 vol. % of the particles have a particle size of 100 $\mu$m or less.

According to yet another aspect of the invention, there is provided a method of making a batter comprising mixing flour, water, and optionally starch, and providing a batter comprising glutenin particles having a volume surface averaged particle size smaller than 10 $\mu$m.

Further, according to another aspect of the invention, there is provided a method according comprising mixing flour, water, and optionally starch, and providing a batter having a particle size distribution wherein at least 95 vol. % of the particles have a particle size of 100 $\mu$m or less.

According to another aspect of the invention a food product having a coating comprising the batter according to the invention is provided. In yet another aspect of the invention there is provided a method of making a food product wherein the method comprises coating a non-fried or non-deep-fried product with the batter according to the invention.

### Brief description of the drawings

Figure 1 depicts the energy-input versus time when kneading a dough for a batter according an embodiment of the invention;

Figure 2 shows the particle size distribution of a number of batters according to the invention compared to a standard batter;

Figure 3 shows the viscosity of batters according to the invention compared to a standard batter;

Figure 4 shows the number of events when cracking a crust of crusts based on standard batter and a batter according to the invention as function of frying time;

Figure 5 shows the water content of crusts based on standard batter and a batter according to the invention as function of frying time.

**Detailed description**

Herein, the term "tempura" refers to food coated with batter to be used as fried or deep fried product. It relates to the Japanese method of cooking vegetables, shellfish etc.: they are coated with a light (corn)starch batter and deep-fried.

The term "gluten" is known to the person skilled in the art and refers to the protein in flour which gives the dough elasticity and strength. Glutenin particles are often also indicated as gluten particles. The term "starch" refers to starches known to the person skilled in the art, in an embodiment also including modified starches. Herein, when starch contents (of the batter) are mentioned, these starch contents refer to added starch, i.e. these contents do not refer to starch contained in the flour.

The term "food product" herein especially refers to a food product such as products selected of one or more of meat, poultry, fish, vegetable, fruit, cereal and nut origin. In a specific embodiment, it refers to the non-cooked, i.e. preferably non-fried or non-deep-fried food product comprising a coating with the batter according to the invention. The term "cooked food product" refers to a cooked food product obtainable by coating a non-fried or non-deep-fried food product with the batter according to the invention and subsequently cooking, preferably frying or deep-frying, the coated non-fried or non-deep-fried food product, respectively. In a variant, the terms "cooking" or "cooked" may also refer to the process of heating in a micro wave or magnetron, (oven) baking, roasting, or grilling. The terms "frying" and "fried" are well known to the person skilled in the art. Frying especially refers to cooking in fat (liquid when heated) or oil in for instance a pan or griddle. In the case of deep-frying, the food is completely immersed in hot oil, whereas when shallow-frying (or "frying") food is cooked in for instance a frying pan where the oil (or liquid fat) generally does not cover the food. The invention is described with reference to frying or deep-frying, but the invention is not limited to those types of cooking. The invention is also directed to the use of the batter in general, also as coating for food products that are cooked otherwise, for instance by heating in a micro wave or magnetron, (oven) baking, roasting, or grilling, etc.

The term "volume surface averaged particle size" also called "Sauter mean diameter" refers to the diameter of a particle whose volume / surface ratio is the same as the arithmetic mean of volume/surface values of the total number of particles belonging to the same sample under examination.

As known to the person skilled in the art, "dough" is a mixture of flour and water, and usually a leavening agent (such as baking powder or yeast), which is stiff but pliable. The term "batter" is known to the person skilled in the art and refers to a mixture of flour and water, optionally also comprising starch and other ingredients like baking powder, etc. However, instead of water or in addition to water, also milk may be used for the dough or batter. In the invention, the embodiments are described with reference to water. Nevertheless, milk may also be used. Therefore, in an embodiment, contents with respect to water refer to the contents of a liquid comprising one or more of water and milk. Hence, for instance the term "at least 35 wt.% water" may in embodiments also refer to "at least 35 wt.% milk" or to "at least 35 wt.% of a mixture comprising milk and water". Hence, according to an embodiment, the batter further comprises milk. Dough and batter may further comprise starch (next to starch contained in the flour). The primary difference between "dough" and "batter" is the consistency. Dough is thicker and can be moulded by hand, while batter is semi-liquid or liquid (or suspension), and can thus be spooned or poured. A batter preferably comprises at least 35 wt.% water, more preferably at least 40 wt.% water.

The batter of the invention, when used as coating on food products or comprised in a coating, advantageously provides fried or deep-fried food products ("cooked food products") with a more crispy coating than food products coated with state of the art batters. The batter of the invention further advantageously is more stable than state of the art batters. Whereas state of the art batters are only stable for a few hours and quickly loose their homogeneity, the batter according to the invention is stable and stays homogenous for at least 12 hours or even longer.

The batter according to the invention can be made in different ways. In an aspect, the invention provides a method of making a batter comprising mixing flour, water, and optionally starch (i.e. starch in addition to starch comprised in the flour), and providing a batter comprising glutenin particles having a volume surface averaged particle size smaller than 10 $\mu$m. The invention is also directed to the batter per se: a batter comprising flour, water and optionally starch, wherein the batter comprises glutenin particles having a volume surface averaged particle size smaller than 10 $\mu$m, preferably smaller than 5 $\mu$m, even more preferably smaller than 2 $\mu$m.

Without being bound to any theory, it appears that the batter according to the invention renders it advantageous properties like stability from the small glutenin particles that do not or do substantially not re-aggregate within a few hours after preparing the batter (vide infra). Even after about 12 hours, the glutenin particles (for instance having a volume surface averaged particle size smaller than 10 $\mu$) in the batter according to the invention appear not to re-aggregate to larger particles or show sedimentation. Hence, a batter is provided obtainable by the methods for making a batter according to the invention, wherein the glutenin particles do not re-agglomerate and/or show sedimentation within 12 hours after preparation of the batter when stored at 15-25°C.

Preferably, the batter according to the invention comprises at least flour and starch.

According to an aspect of the invention, a batter comprising flour and optionally starch, is provided, further optionally comprising one or more ingredients selected from the group comprising baking powder and salt, wherein at least 85 vol.%, more preferably at least 90 vol.%, even more preferably at least 95 vol.%, yet even more preferably at least 98 vol.% of the particles in the batter have a particle size of 100 $\mu$m or less. State of the art batters, wherein the glutenin particle sizes are not reduced to such an extent as according to the method of making the batter according to the invention, usually have a substantial amount of particles having particle sizes larger than about 100 $\mu$m. In the batter according to the invention preferably at least 2 vol.%, more preferably at least 5 vol.%, even more preferably at least 10 vol.%, of the particles in the batter have a particle size of in the range of 10 $\mu$m or less. Preferably, the glutenin particles in the batter have a volume surface averaged particle size of less than 10 $\mu$m, preferably less than 5 $\mu$m, more preferably less than 2 $\mu$m.

In a preferred embodiment, the invention provides a method of making a batter which method includes providing flour and water, optionally kneading the flour and water, and providing the optionally kneaded flour and water to a homogeniser, homogenizing, and providing the batter as described herein. The step of homogenizing may be repeated until the desired glutenin particle size is obtained. The starting mixture of flour and water before homogenizing preferably comprises about 20-80 wt.%, preferably 30-65 wt.% flour and about 20-80 wt.%, preferably 35-70 wt.% water. As known to the person skilled in the art, homogenization technology is based on pumping a liquid under high pressure through a narrow slit (opening or valve) to subdivide particles or droplets present in fluids into the very smallest sizes (submicron) and create a stable dispersion ideal for further processing. As known to the person skilled in the art, homogenization features a high concentration of energy released on processed liquids by a combination of fluid mechanical effects like local cavitation, turbulence, shear and impact to achieve a homogeneous particle size distribution. The process may be carried out in a special designed valve, which represents the core of the homogenizing process. The passage of fluid through the minute flow passages in the valve under high pressure and controlled flow action subjects the fluid to conditions of high turbulence and shear that creates a highly efficient mechanism for particle and droplet size reduction.

After making the homogeniser product, starch and other components like salt, baking powder, emulsifiers, etc., may be added (vide infra). Salt and baking powder may also be added to the mixture of flour and water to be homogenized, i.e. before homogenizing the mixture of water and flour. Starch is preferably added after homogenizing the product in the homogenizer and is thus preferably admixed with the homogenizer product, with techniques known to the person skilled in the art. During the process, for instance to the mixture of flour and water to be homogenized, or to the homogenizer product, optionally other additives may be added, such as for controlling the particle size of the glutenin particles (vide infra).

In yet another preferred embodiment, the invention provides a method of making a batter mixing flour and water, kneading the flour and water until an over-developed dough is obtained, admixing water and providing the batter according to the invention. In this method, first an overkneaded (overdeveloped) dough is made. This overdeveloped dough comprises glutenin particles having a volume surface averaged particle size of less than 10 $\mu$m, preferably less than 5 $\mu$m, more preferably less than 2 $\mu$m. In general, overkneading a dough in for example bread making is not desired, since this leads to an undesirable compact flat bread. However, it appears that the above-mentioned advantageous properties of the batter according to the invention are also obtained when the batter is based on an overdeveloped dough. Such dough can be obtained when the kneading/mixing power (energy.s$^{-1}$) input is continued after reaching a maximum, until a kneading/mixing power input is obtained of equal or less then about 80% of the maximum energy input. According to a specific embodiment, a method is provided wherein the over-developed dough is obtained by kneading the flour and water such that after reaching a maximum torque value, kneading is continued until a final torque value is obtained of equal to or less then 80 % of the maximum torque value. More preferably, the final torque value is less than about 70 % of the maximum torque value; yet even more preferably, the final torque value is less than about 65 % of the maximum torque value. In this way, a mixture of flour and water is obtained wherein the glutenin particles have the desired particle size, and do not or do not substantially re-agglomerate to larger particles for hours, for instance for at least 12 hours. The starting mixture of flour and water before kneading preferably comprises about 50-80 wt.% flour, more preferably 60-70 wt.% and about 20-50 wt.% water, more preferably 30-40 wt.% water. The person skilled in the art knows how to make dough. The mixture may further comprise baking powder and salt (vide infra). Preferably, salt is added to the mixture of flour and water, because this advantageously enables the production of a less sticky dough. Further, optionally other additives may be added for controlling the particle size of the glutenin particles (see below).

The overdeveloped dough is also an aspect of the invention. Such dough may be further processed to obtain the batter according to the invention (see below), but may also be stored, preferably after an optional freeze-drying step. This enables the option of a later processing or processing to a batter at another place.

After making the overdeveloped dough, starch and other components like salt, baking powder, emulsifiers, etc., may be added, as will be known to the person skilled in the art. Subsequently, the overdeveloped dough may be mixed with these additional components and water may be added to facilitate mixing. However, components like salt and baking powder may also have been added to the primary mixture of flour and water. To obtain the batter according to the invention, the dough after overkneading, i.e. the overdeveloped dough, will further be diluted with water. In a preferred embodiment, water is admixed such that a batter is obtained comprising 35-70 wt.% water, relative to the total weight of the batter. More preferably, the water content is about 40-60 wt.%, relative to the total weight of the batter.

In the above described embodiments of the method of the invention, one or more additives may be added for controlling the particle size of the glutenin particles. In an embodiment, one or more additives are used which are selected from the group consisting of proteolytic enzymes, SH-groups containing proteins, peptides and amino acids, and other compounds that specifically facilitate reduction of the glutenin particles size. Preferred examples of such particle size controlling additives are selected from the group consisting of soy protein, cysteine, glutathione, wheat bug protease (for instance Eurygaster integriceps protease) and sodium metabisulphite. In an embodiment, the phrase "controlling the particle size of the glutenin particles" refers to preventing or reducing re-aggregation of broken up glutenin particles. Hence, in an embodiment, the additive is used to facilitate reduction of the particle size of the glutenin particles. The additives may be used as blockers of SH-groups, thereby controlling re-agglomeration. Therefore, according to an aspect of the invention, a method of making a batter is provided, wherein optionally SH-group blockers are used. SH-group blockers may prevent re-agglomeration of the glutenin particles in the dough or batter according to the invention. SH-group blockers may for instance comprise sodium metabisulphite and SH-groups containing proteins, peptides and amino acids such as soy protein, cysteine, and glutathione.

According to another aspect of the invention a method of making a dough or batter according to the invention is provided, wherein a proteolytic enzyme is used to reduce the particle size of the glutenin particles to the desired particle size specifications (see above). For instance, the starting components for the batter or dough may be mixed and the proteolytic enzyme, like wheat bug protease, may be added to reduce the glutenin particle size. In an embodiment, the glutenin particles in a mixture comprising flour and water are reduced in particle size by the proteolitic enzyme. Subsequently, the other ingredients are admixed such as the optional starch, baking powder, salt and other optional ingredients. Hence a method is provided comprising providing flour, water, and optionally starch (and optionally other components), wherein the glutenin particles are reduced in particle size by the proteolitic enzyme, preferably wheat bug protease (Eurygaster integriceps protease), to the volume surface averaged particle size of smaller than 10 $\mu$m (or other described preferred values) and/or to a particle size distribution wherein at least 95 vol. % of the glutenin particles have a particle size of 100 $\mu$m or less, and providing the dough or batter according to the invention.

In a specific embodiment, there is provided a batter comprising 15-65 wt.% flour, 0-45 wt.% starch, 35-70 wt.% water and optionally 0.1-2 wt.% baking powder and 0-2 wt.% salt, relative to the total weight of the batter. The batter may further comprise about 0-2% other minor ingredients, such as emulsifiers, texturisers, etc. As will be clear to the person skilled in the art, the total amounts of the components add up to 100 wt.%. Preferably, the batter comprises 10-30 wt.% starch.

Baking powder is known to the person skilled in the art and is commercially available. Baking powder is used to leaven baked goods. Baking powder usually consists of a mixture comprising baking soda, one or more leavening acids, and a diluent. For a more detailed description, see for instance: Hoseney R.C., Wade, P., and Finley, J.W. in Wheat Chemistry and Technology, vol. II, chapter 7, pages 430-431 Y. Pomeranz, editor. third edition 1988, published by American Association of Cereal Chemists, Inc, St Paul, Minnesota, USA. The addition of baking powder is not necessary, but may provide additional advantageous features to the end product in terms of brittleness/crispiness. Likewise, the addition of salt is not necessary, but addition may give the coating a better taste. Further, the addition of salt advantageously facilitates the dough making process according to an embodiment of the invention (vide supra).

Addition of starch is also not necessary, however preferred. Flour comprises starch (usually about 64 - 71 wt.% relative to the total weight of the flour), but the addition of extra starch to the batter is advantageous since less, relative expensive, flour may be used when starch is being added, like potato starch. Hence, herein the phrase "0-45 wt.% starch", or other similar terms, refers to additional starch, i.e. starch added in addition to the starch that may be present in flour. Starch present in flour is not taken into account in the phrase "0-45 wt% starch", as further exemplified in the appending examples.

To obtain the desired batter, after homogenizing in a homogenizer or after overkneading, the product obtained after homogenizing or overkneading may be further diluted to provide the batter of the invention In an embodiment, water is admixed such that a batter is obtained comprising 35-70 wt.% water, relative to the total weight of the batter (see also above).

Preferably, the batter of the invention comprises:

| | |
|---|---|
| flour: | 30-50 wt.% |
| starch: | 10-30 wt.% |
| baking powder: | 1-2 wt.% |
| salt: | 0-2 wt.% |
| others: | 0-2 wt.% |

water up to 100 wt.%.

In a preferred embodiment, the flour is selected from the group consisting of (1) wheat flour, (2) oat flour, (3) barley flour, (4) rye flour and (5) the combination of corn and rice flour. Combinations of two or more flours from the group of wheat, oat, barley, rye and the combination corn/rice flour may also be used. For instance, a combination of wheat and oat flour may be used, or a combination of wheat, corn and rice flour may be used. Usually the protein content of flour is about 7-15% wt.%. Preferable, flours are used having a relatively high gluten content, like at least 8-10 wt. % (relative to the flour). Preferably a flour is used wherein the flour comprises 2-4 wt.% protein other than gluten, relative to the weight of the flour. Such proteins are for instance albumins and enzymes, which may for instance be selected to be used to control the viscosity of the batter. Preferably, the batter comprises also starch (i.e. additional starch) (and optional other ingredients like baking powder, salt, etc.). The batter according to the invention preferably comprises a starch selected from the group consisting of corn, potato, tapioca and cereal starch (e.g. wheat or rice starch). Combinations of two or more starches may also be used. Preferably, a batter of is provided wherein the flour comprises wheat flour and wherein the starch comprises wheat starch.

As mentioned above, the invention is directed to a batter with glutenin particles having a volume surface averaged particle size smaller than 10 $\mu$m.

The invention is also directed to a batter wherein at least 85 vol. %, more preferably at least 90 vol. %, of the particles comprised in the batter have a particle size of 100 $\mu$m or less. In a specific embodiment, a batter is provided wherein at least 95 vol. % of the particles have a particle size of 100 $\mu$m or less.

The volume surface averaged diameter of the gluten in such batter is preferably between about 0.01 and 10 $\mu$m, more preferably between about 0.1 and 5 $\mu$m.

Preferably, a batter according to the invention comprises the feature of having an apparent viscosity of less than 0.6 Pa.s at shear rates between 10 and 1000 s$^{-1}$, more preferably less than about 0.5 Pa.s. Preferably, the apparent viscosity of the batter according to the invention is set at values between about 0.05 and 0.6 Pa.s, more preferably between about 0.1 and .0.5 Pa.s at these shear rates. State of the art batters for these applications have apparent viscosities in the range of about 0.65 Pa.s or larger. In the art, instead of the term " apparent viscosity" also the term "viscosity" is used. The apparent viscosity conditions are based on batters comprising 47.5 wt.% water. In case a batter comprises another percentage of water, the batter may be diluted with water or concentrated to a water content of 47.5 wt.%. Then the apparent viscosity is measured and a batter according to the invention may fulfil above mentioned criteria, whereas batters not according to the invention do not. Hence, a batter according to the invention has an apparent viscosity of less than 0.6 Pa.s at shear rates between 10 and 1000 s$^{-1}$ when the water content of the batter is 47.5 wt. % ($\pm$ 1 wt%, i.e. between 46.5 and 47.5 wt.%) or is brought at this value of 47.5 wt.% ($\pm$ 1 wt%).

Preferably, the batter according to the invention has an apparent viscosity value at shear rates between 10 and 1000 s$^{-1}$ which is at least 10 %, more preferably at least 20%, even more preferably at least 30%, yet even more preferably at least 40%, and even more preferably at least 50% lower than a standard batter with the same composition and measured under the same conditions and provided via state of the art preparation. Hence, in an embodiment, a batter is provided, obtainable by the method according to the invention, having an apparent viscosity value at shear rates between 10 and 1000 s$^{-1}$ which is at least 10 %, lower than a standard batter with the same composition and measured under the same conditions, wherein the standard batter is obtainable by mixing flour, water, and optionally starch (and optional other components).

According to yet another aspect of the invention there is provided a food product having a coating comprising the batter. Hence, the invention also provides a method of making a food product comprising coating a non-fried or non-deep-fried food product with the batter according to the invention, which batter is obtainable by the method(s) of making a batter according to the invention. As mentioned above, the food product may preferably comprise a filling selected of one or more of meat, poultry, fish, vegetable, fruit, cereal and nut origin. Coating may be performed by methods known to the person skilled in the art. Preferably, a coating method is used wherein coating is performed by submerging the non-fried or non-deep-fried food product in the batter, by spraying the batter on the non-fried or non-deep-fried food product or by coating the non-fried or non-deep-fried food product with the batter, thereby providing the food product having a coating comprising the batter according to the invention. The batter for coating on the food product may used as such. In a further embodiment, a coating liquid comprising the batter is used, wherein the coating liquid may further comprise other ingredients, like texturisers, emulsifiers, flavours, fragrances, aroma's, colorants., etc. After coating with the batter or coating liquid, breadings may be applied to the coated food product. Further, the food product may also comprise multiple coatings with the batter or with a coating liquid comprising the batter, as will be clear to the person skilled in the art. Usual coating thicknesses with the batter according to the invention are between about 0.1 mm and 2 mm.

In a specific embodiment, a method of making a food product comprising coating a non-fried or non-deep-fried food product as mentioned above is provided, further comprising frying or deep-frying the coated non-fried or non-deep-fried food product, respectively. Hence, according to another aspect of the invention, a cooked food product obtainable by such method is provided.

**Examples**

**Example 1: batters**

*Batter 1: Preparation of standard batter (state of the art)*

An example of the method for preparing a standard batter is the following:

Mix a batter of 330 grams of wheat flour, 330 grams of potato starch, 13,2 grams salt, 19,8 grams baking powder and 627 ml water of room temperature in a bowl of a Hobart mixer at stage 1 for 3 minutes. Control that the batter is homogeneous. Let the batter rest for one hour before use. The weight ratio of this batter is the following recipe:

| | |
|---|---|
| Wheat flour | 25 |
| Potato starch | 25 |
| Salt | 1 |
| Baking Powder | 1.5 |
| Water | 47.5 |

The properties of the Hobart mixer are: Brand: Hobart; Model: N-50; S.N.: 99-707-970; Max. Rpm: 1425; Stages: 3.

*Batter 2: Preparation of batter by extreme over mixing*

An example of an effective method for preparing a batter by extreme over mixing is the following:

Mix a dough of 250 grams of wheat flour, 5 grams salt and 150 ml cold water (0°-5° C) in a 300 grams bowl of a Brabender Plastograph at 100 rpm. As soon as the flour is hydrated, speed up the mixer from 100 to 150 rpm. Cool the bowl by a water bath to 0° C. The curve of the torque soon shows a rather sharp maximum. Continue mixing until the torque has at least become 30% less than the maximum torque (has decreased at least by 30 % from its maximum value). Stop mixing and remove half of the weight of the dough. Add 125 grams of potato starch, 2,5 grams salt, 6,5 grams baking powder and 65 ml of cold water (0-5°C). Start again the mixer with 150 rpm for 10 minutes. Slowly dilute the dough with 100 ml cold water (0-5°C) at a speed of 150 rpm. The batter is ready to use. The weight ratio of this batter is the following recipe.

| | |
|---|---|
| Wheat flour | 25 |
| Potato starch | 25 |
| Salt | 1 |
| Baking Powder | 1.5 |
| Water | 47.5 |

Properties of this Brabender Plastograph are: Brand: BRABENDER; Type: Plastograph 810108,007; S.N.: 991271; Year 1999; Max RPM: 150; PT100 temperature measured.

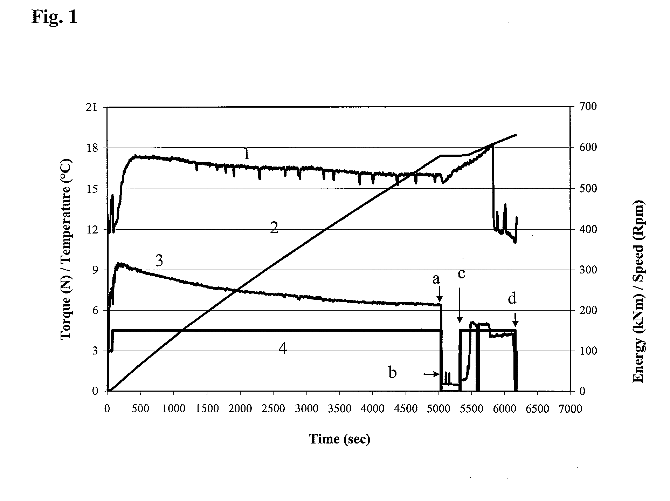

Figure 1 shows the temperature (reference number 1), the energy (reference number 2), the torque (reference number 3) and the speed (reference number 4) of the mixer during the dough-batter mixing curve, i.e. overkneading (overdeveloping) a dough and formation of a batter. Speed 4 is constant at 150 RPM, except for a period between about 5000 seconds (reference number a), and then half of the dough thus obtained is removed (reference number b). 125 gram potato starch and 65 ml cold water are added and mixing is continued again at c. Then, the mixture is diluted with water (reference number d) to obtain the batter according to the invention. In this way, a batter is provided based on an over-developed dough, wherein the over-developed dough is obtained by kneading the flour and water (and the optional component salt) such that after reaching a maximum torque value, kneading is continued until a final torque value is obtained of equal to or less then 70 % of the maximum torque value. Thereafter, the dough is diluted with water and starch is be added.

*Batter 3: Preparation of batter by homogenizing*

An example of an effective method for preparing a batter by homogenizing with a homogenizer is the following:

Make a mixture of wheat flour, salt, baking powder and cold water (0-5°C) in a Hobart mixer (3 minutes at stage 1) to get a good suspension. Use the weight ratio of the following batter recipe, but without the starch, because this will be added later. The reason is that the total batter recipe gives a too high viscosity to get it through the pump. The following recipe was used:

| | |
|---|---|
| Wheat flour | 25 |
| Potato starch | 25 |
| Salt | 1 |
| Baking Powder | 1.5 |
| Water | 47.5 |

When the suspension looks homogeneous, it is pumped into a homogenizer. The properties of the homogenizer are: Brand: NIRO SOAVI; Type: Panda; S.N.3030; Year: 1996; Max Press 150 Mpa; Rated flow (dm3/h) : 10.

The handling of the batter for this example is as follows: fill the homogenizer (which is located in a cold room of 5°C) with water and bring the pressure to a level of 100 bar for stage 1 and also 100 bar for stage 2. Let the batter pass the homogenizer 10 times. Put the batter again into the bowl of the Hobart mixer. Add the potato starch and mix for 3 minutes at stage 1. The batter is ready to use. The properties of the Hobart mixer are: Brand: Hobart; Model: N-50; S.N.: 99-707-970; Max. Rpm: 1425; Stages: 3.

**Example 2: Particle size measurements**

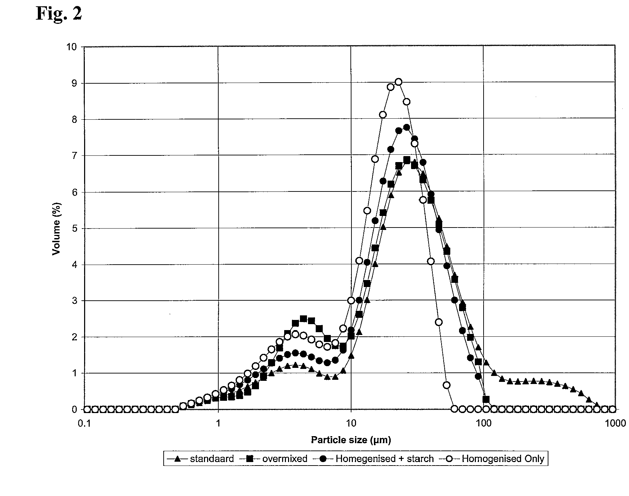

Figure 2 shows the particle size distribution of the batter thus obtained, as measured with a Malvern. The properties of this Malvern are: Brand: Malvern, Type: Mastersizer Hydro 2000S (Malvern Instruments, Southborough, UK); Year: 2004. Particle sizes were determined using this Malvern laser diffraction apparatus. As will be clear to the person skilled in the art, the measurements are based on low angle laser light scattering. Thereto the samples were diluted to an appropriate extent with water (see instruction instrument). The light diffraction pattern obtained were analyzed in terms of particle size distribution using Fraunhofer diffraction theory, assuming a spherical particle shape. Results were checked by analyzing the light diffraction pattern also by using the Mie theory. As known to the person skilled in the art, from the particle size distribution the volume surface averaged diameter $d_{32}$ can be calculated using:

$$d_{32} = \frac{\int_0^\infty d^3 f(d)\mathrm{d}d}{\int_0^\infty d^2 f(d)\mathrm{d}d} \approx \frac{\sum_{i=1} N_i d_i^3}{\sum_{i=1} N_i d_i^2} \tag{1}$$

Herein $d$ is diameter, $f(d)$ is the frequency distribution of the number and $N_i$ the number of particles in size class $i$ and $d_i$ the value of $d$ characterizing class $i$ (midpoint of class $i$). The first part of equation 1 is based on the assumption that the size distribution is a continuous one and for the second part it is assumed that the distribution can be split into size classes.

The x-axis indicates the particle size as measured and the y-axis the volume percentage. In figure 2, the triangles represent a standard batter (batter 1), the cubes represent a batter based on an over-developed dough (batter 2), homogenised only, indicated with open circles relates to a homogenized batter (batter 3) before starch is added (see figure 1 at (a)) and the closed circles refer to a homogenized batter with starch (i.e. batter 3 (see figure 1 at (d))).

All batters have the same composition, nevertheless, the particle size distributions are substantially different. Important differences are the fact that the particles with size above about 100 $\mu$m seem to have disappeared. In contrast thereto, the range between 1 and 10 $\mu$m shows an intensity increase. From these data, for example from the difference between the curves of a standard (mere mixing of ingredients) and a batter with the same composition but prepared according to the invention (i.e. the difference between a batter according to the invention and a batter comprising the same ingredients in the same amounts, but only mixed and not overkneaded or homogenized in a homogenizer), it can be concluded that the invention provides a batter comprising flour, water and optionally starch (and optional other ingredients or additives), wherein the batter comprises glutenin particles having a volume surface averaged particle size smaller than 10 $\mu$m.

The volume surface averaged diameter of the particles in the batter is about 12 $\mu$m for the standard batter (1), for the overkneaded dough batter (2) about 9.9 $\mu$m, for the homogenized + starch batter (3) also about 9.9 $\mu$m and for the homogenized without starch batter about 8.2 $\mu$m.

From these data it can also be concluded that the invention provides a batter wherein at least 95 vol. % of the particles have a particle size of 100 $\mu$m or less. This batter may in a preferred embodiment be a batter comprising glutenin particles having a volume surface averaged particle size smaller than 10 $\mu$m. It further appears that in the batter according to the invention at least about 5 vol.% of the particles in the batter have a particle size of in the range of 10 $\mu$m or less.

In case wheat starch and wheat flour would be used, the invention provides a batter wherein at least 85 vol. %, more preferably at least 90 vol.%, even more preferably at least 95 vol.%, yet even more preferably at least 98 vol. % of the particles in the batter have a particle size of 80 $\mu$m or less.

State of the art batters, wherein the glutenin particle sizes are not reduced to such an extent as according to the method of making the batter according to the invention, usually have a substantial amount of particles having particle sizes larger than about 100 $\mu$m (for instance due to the presence of glutenin particles).

In case a dough is made without overkneading, the glutenin particles may re-agglomerate, which is the case when dough is kneaded according to the standards for bread preparation. However, according to the invention, when overkneading the dough, the dough, the batter based on such dough, the glutenin particles have been reduced in particle size to such an extent, that it appears that they do not substantially re-agglomerate. The same applies for the batter provided with the homogenization method. Further, re-agglomeration may also be diminished or inhibited by adding additives for controlling the particle size of glutenin particles.

**Example 3: Viscosity measurements**

The batters as described above were investigated with respect to their viscosity behaviour with a Paar Physica MCR300, which is a commercial stress rheometer. This rheometer allows to run stress and strain controlled experiments. The rheometer in this experiment is used to probe viscosity as a function of shear rate at constant temperature. The following setup is used:

Geometry:       CC27 (concentric cylinders)
Bottom plate:   TEZ150P-C
Shear rate:     0.01-1000 /s $\rightarrow$ 36 data points, interval 10 s 1000-0.01 /s $\rightarrow$ 36 data points, interval 10 s
Temperature:    22 °C

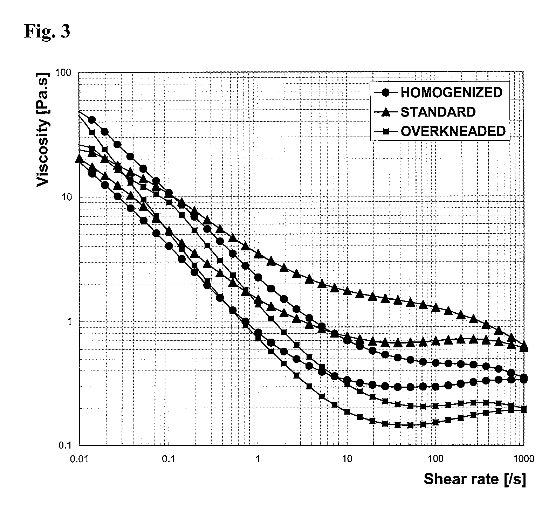

The geometry was filled with batter and allowed to rest for 15 min at 22°C before measurement was started, preferably at least 30 minutes. The viscosity measurements provide are depicted in figure 3. Homogenized batter 3 (see example 1) is indicated with dots, standard batter 1 (see example 1) is indicated with triangles and the batter based on overkneaded dough (batter 2; see example 1) is indicated with squares. The upper curve for each batter indicates the curve obtained when increasing the shear rate; the lower curve indicates the curve obtained when again decreasing the shear rate. At shear rates > 1 $s^{-1}$ the apparent viscosities of the overkneaded and homogenized batters are lower than apparent viscosity of standard batter. It is clear that for example when increasing the shear rate, at shear rates larger than about $s^{-1}$, the apparent viscosity of batters according to the invention is lower. When decreasing shear rates again, for example starting from 1000 $s^{-1}$ to 1 $s^{-1}$, the same conclusion can be drawn. From the figure can be concluded that a batter (with 47.5 wt.% water) according to the invention has an apparent viscosity of less than 0.6 Pa.s at shear rates between 10 and 1000 $s^{-1}$. As will be clear to the person skilled in the art, other criteria can also be derived from the figure.

In case measurements are repeated, i.e. a new increase of shear rates is started after a cycle of increase and decrease, again preferably at least 15 minutes, preferably at least 30 minutes, rest is allowed, before the next measurement cycle is started.

The apparent viscosity data are based on batters comprising 47.5 wt.% water. In case a batter comprises another percentage of water and one desires to compare the batter with above data, the batter may be diluted with water or concentrated to a water content of 47.5 wt.%. Then the apparent viscosity is measured and a batter according to the invention may substantially fulfil above mentioned criteria, whereas batter not according to the invention do not.

It further appears that the batter according to the invention has an apparent viscosity value at shear rates between 10 and 1000 $s^{-1}$ which is at least 10 %, more preferably at least 20%, even more preferably at least 30%, yet even more preferably at least 40%, and even more preferably at least 50% lower than a standard batter with the same composition, prepared according to state of the art methods, and measured under the same conditions. For instance, at 1000 $s^{-1}$, the standard batter (see example 1, batter 1) has an apparent viscosity value of 0.616 Pa.s, whereas the batters according to the invention have apparent viscosities of 0.351 and 0.191, respectively. At a shear rate of 100 $s^{-1}$ (with increasing shear rate), these values are 1.29, 0.461 and 0.207, respectively (for the standard batter 1, the homogenized batter 3 and the batter 2 based on an overkneaded dough).

**Example 4: Lab-tests on fried crusts: Texture analysis and sound recording**

Mechanical test are widely used for the determination of textural attributes of (semi)solid foods. For crisp foods the sound emitted during mastication is often described as being an important characteristic of these foods and is therefore often used as indicator of crispness. The method described here is different compared to other methods found in the vast amount of literature on this topic. Most important the test combines the mechanical and acoustical data which gives additional information compared to analyzing sound or mechanical data only. Moreover the test uses a deformation speed of 40 mm.s$^{-1}$, which is representative of the speed of incisor penetration during human mastication. This test speed is 100-1000x faster than speeds regularly used in literature. To work with these high deformation speeds means that the deformation studied occurs in a relative short time interval. To accurately record signals of short duration analogue output of the texture analyzer was converted by a Bruel and Kjaer A/D converter into a 65 000 pps signal (normally the texture analyzer software works with 500 pps). To mimic the shape of a human incisor a wedge shaped probe with an angle of 30° was used for deformation. During deformation sound is recorded simultaneous with the force signal by a B&K free-field microphone. The same A/D converter as for the force signal is used for digitalizing the signal of the microphone, again at 65 000 pps.

The digital sound and force signals are recorded and stored by PULSE 9.0 (B&K) software. Sound Quality (B&K) is used to convert the PULSE files into excel files. The data are further analyzed by the use of three excel macros (in VBA). To minimize the effect of environmental sound the tests are performed in an acoustic insulated chamber (sound reduction of 50 dB). Moreover the texture analyzer is insulated to minimize sound emission by the equipment.

The Excel-VBA macro determines the amount of work, the maximum force and the number of peaks in the force signals. A similar VBA macro was used for determination of the sound pressure level (dB), sound intensity and the amount of events in the sound signals.

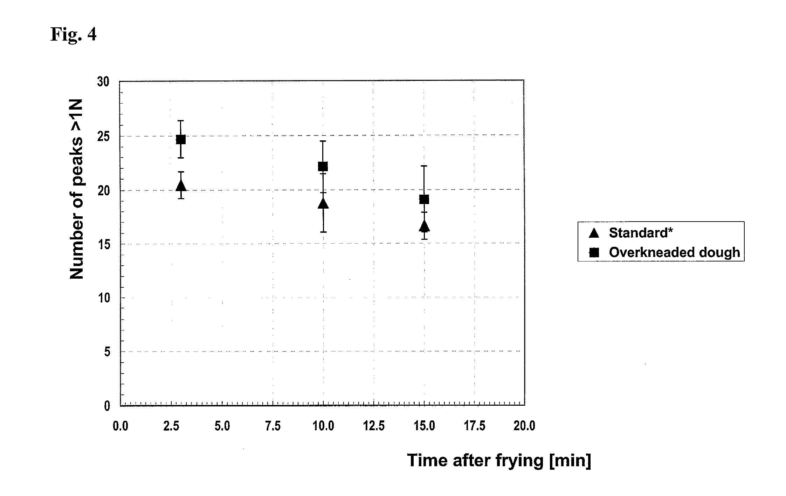

The number of peaks/events in the force vs. time graphs and the sound pressure vs. time curves were determined using an algorithm counting the number of events as a function of event size. Under the same conditions (for instance threshold value for events) crusts based on standard batter 1 and batter 2 based on an overkneaded dough were measured according above mentioned method as function of frying time, see figure 4. The number of events appears to be larger for the crust based on the overkneaded dough (batter 2) than for the standard batter 1. The results show that the crust of the batter based on the overkneaded dough gives a different mechanical response during the deformation test compared to the crust of the standard batter. The number of peaks in the force vs. time graph of these crusts is higher. Previous experiments have shown that crispness of the snacks correlates to the amount of peaks in the force vs. time graphs; the more peaks (i.e. events), the crispier the products.

### Example 5: Lab-tests on fried crusts: water content in crust

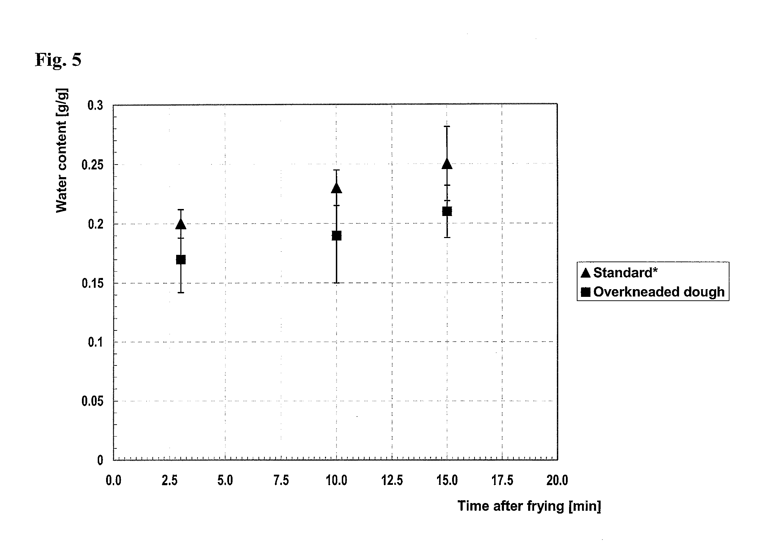

The water content was determined by drying the crusts at 105 °C for 12 hours. Water content was calculated as the mass loss during drying (expressed as grams of mass loss per gram of initial weight). The results are shown in figure 5. The crust (after frying) of the batter based on the overkneaded dough has a lower water content, preferably at least 10 wt.%.

These results and the results from example 4 corresponds to a more crispy crust, which was confirmed by a preliminary sensory test. The coatings of the fried or deep-fried food product according to the invention were estimated to be at least 10% more crispy than food products coated with state of the art batters.

### Example 6: Batter stability

The batters were stored at 6°C for 20 hours. It appeared that the state of the art batter was degraded and showed sedimentation, resulting in a more concentrated lower layer and a less concentrated upper layer, whereas the batter according to the invention was still homogeneous. A batter is provided obtainable by the methods for making a batter according to the invention, wherein the glutenin particles do not re-agglomerate and/or show sedimentation within 12 hours after preparation of the batter when stored at 15-25°C.

It should be noted that the above-mentioned embodiments and examples illustrate rather than limit the invention, and that those skilled in the art will be able to design many alternative embodiments without departing from the scope of the appended claims. Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

### Claims

1. A batter comprising flour, water and optionally starch, wherein the batter comprises glutenin particles having a volume surface averaged particle size smaller than 10 $\mu$m.

2. A batter according to claim 1, having a particle size distribution wherein at least 95 vol. % of the particles have a particle size of 100 $\mu$m or less.

3. The batter according to one of the preceding claims, wherein the flour comprises wheat flour.

4. The batter according to one of the preceding claims, comprising 15-65 wt.% flour, 0-45 wt.% starch, 35-70 wt.% water and optionally 0.1-2 wt.% baking powder and 0-2 wt.% salt, relative to the total weight of the batter.

5. A food product having a coating comprising the batter according to one of claims 1-4.

6. A cooked food product obtainable by coating a non-fried or non-deep-fried food product with the batter according to one of claims 1-4 and subsequently frying or deep-frying the coated non-fried or non-deep-fried food product, respectively.

7. The food product according to claim 5 or the fried or deep-fried food product according to claim 6, wherein the food product, the non-fried or the non-deep-fried food product comprises a filling selected of one or more of meat, poultry, fish, vegetable, fruit, cereal and nut origin.

8. A method of making a batter comprising mixing flour, water, and optionally starch, and providing a batter comprising glutenin particles having a volume surface averaged particle size smaller than 10 $\mu$m.

9. The method according to claim 8 comprising mixing flour, water, and optionally starch, and providing a batter having a particle size distribution wherein at least 95 vol. % of the particles have a particle size of 100 $\mu$m or less.

10. The method according to one of claims 8 or 9, comprising providing flour and water, optionally kneading the flour and water, and providing the optionally kneaded flour and water to a homogeniser, homogenizing, and providing the batter.

11. The method according to one of claims 8 or 9, comprising mixing flour and water, kneading the flour and water until an over-developed dough is obtained, admixing water and providing the batter.

12. The method according to claim 11, wherein the over-developed dough is obtained by kneading the flour and water such that after reaching a maximum torque value, kneading is continued until a final torque value is obtained of equal to or less then 80 % of the maximum torque value.

13. The method according to one of claims 8-12, wherein water is admixed such that a batter is obtained comprising 35-70 wt.% water, relative to the total weight of the batter.

14. The method according to one of claims 8-13, further using an additive for controlling the particle size of the glutenin particles.

15. The method according to claim 14, wherein the additive for controlling the particle size of the glutenin particles comprises an additive selected from the group consisting of soy protein, cysteine, glutathione, wheat bug protease and sodium metabisulphite.

16. The method according to one of claims 8 or 9, comprising providing flour, water, and optionally starch, wherein the glutenin particles are reduced in particle size by a proteolitic enzyme, preferably wheat bug protease, to the volume surface averaged particle size of smaller than 10 $\mu$m.

17. A batter obtainable by the method of one of claims 8-16, having an apparent viscosity value at shear rates between 10 and 1000 s$^{-1}$ which is at least 10 %, lower than a standard batter with the same composition and measured under the same conditions, wherein the standard batter is obtainable by mixing flour, water, and optionally starch.

18. A batter obtainable by the method of one of claims 8-16, wherein the glutenin particles do not re-agglomerate within 12 hours after preparation of the batter.

19. A method of making a food product comprising coating a non-fried or non-deep-fried food product with the batter according to one of claims 1-4, 17 and 18 or the batter obtainable by the method of one of claims 8-16.

**20.** The method according to claim 19, wherein coating is performed by submerging the non-fried or non-deep-fried food product in the batter, by spraying the batter on the non-fried or non-deep-fried food product or by coating the non-fried or non-deep-fried food product with the batter.

**21.** The method according to one of claims 18 or 19, further comprising frying or deep-frying the coated non-fried or non-deep-fried food product, respectively.

Fig. 1

**Fig. 2**

**Fig. 3**

Fig. 4

EP 1 817 960 A1

Fig. 5

**European Patent Office**

## EUROPEAN SEARCH REPORT

Application Number

EP 05 11 2974

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DON C ET AL: "The effect of mixing on glutenin particle properties: aggregation factors that affect gluten function in dough." JOURNAL OF CEREAL SCIENCE 41 (1) 69-83 2005 CORRESPONDENCE (REPRINT) ADDRESS, R. J. HAMER, CPT-TNO, WUR, PO BOX 8129, WAGENINGEN 6700 EV, NETHERLANDS. TEL. +31 317 485 383. FAX +31 317 485 384. E-MAIL HAMER(A)FOODSCIENCES.NL, vol. 41, no. 1, 25 November 2004 (2004-11-25), pages 69-83, XP002381407 * paragraph [3.5.3] * | 1-4,8,9, 12,13, 17,18 | INV. A21D8/02 A21D10/04 |
| Y | | 1-15, 17-21 | |
| X | FR 2 771 599 A (LOBSTEIN LAURIANNE) 4 June 1999 (1999-06-04) * page 2, line 1 - line 14 * | 1-4, 8-10,17, 18 | |
| X | DATABASE FSTA [Online] INTERNATIONAL FOOD INFORMATION SERVICE (IFIS), FRANKFURT-MAIN, DE; 2002, LEE S ET AL: "Effects of controlled mixing on the rheological properties of deep-fat frying batters at different percent solids." XP002381409 Database accession no. 2003-00-m0496 * abstract * | 1-8 | TECHNICAL FIELDS SEARCHED (IPC) A21D |
| X | GB 784 416 A (CUNO BRABENDER; CARL WILHELM BRABENDER) 9 October 1957 (1957-10-09) * page 4, line 68 - line 82 * | 1-4,8,9, 13,17,18 | |

-/--

~~The present search report has been drawn up for all claims~~

| Place of search | Date of completion of the search | Examiner |
|---|---|---|
| Munich | 18 May 2006 | Graham, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 11 2974

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 451 553 B1 (OLSEN HANS SEJR) 17 September 2002 (2002-09-17) * example 2 * ----- | 1-4,17, 18 | |
| Y | WO 01/05256 A (KERRY INGREDIENTS LIMITED; HELLABY, STEPHEN, RICHARD; PUGH, JEREMY; F) 25 January 2001 (2001-01-25) * page 3, line 14 - page 6, line 16 * ----- | 1-15, 17-21 | |

TECHNICAL FIELDS SEARCHED (IPC)

~~The present search report has been drawn up for all claims~~

| Place of search | Date of completion of the search | Examiner |
|---|---|---|
| Munich | 18 May 2006 | Graham, J |

European Patent

Office

Application Number

EP 05 11 2974

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-15 (partly), 17-21 (partly)

**European Patent Office**

**LACK OF UNITY OF INVENTION SHEET B**

Application Number

EP 05 11 2974

The Search Division considers that the present European patent application does not comply with the requirements of unity of invention and relates to several inventions or groups of inventions, namely:

1. claims: 1-15 (partly), 17-21 (partly)

   Flour comprising batter wherein the glutenin particles have a volume surface averaged particle size smaller than 10 microns, method of making said batter by use of mechanical energy such as homogenising and / or kneading to obtain the reduced glutenin particle size, food product having a coating comprising said batter, fried food product coated by said batter.
   ---

2. claims: 1-21 (partly)

   Flour comprising batter wherein the glutenin particles have a volume surface averaged particle size smaller than 10 microns, method of making said batter by use of proteolytic enzymes to obtain the reduced glutenin particle size, food product having a coating comprising said batter, fried food product caoted by said batter.
   ---

## ANNEX TO THE EUROPEAN SEARCH REPORT
## ON EUROPEAN PATENT APPLICATION NO.

EP 05 11 2974

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2006

| Patent document cited in search report | | Publication date | Patent family member(s) | | Publication date |
|---|---|---|---|---|---|
| FR 2771599 | A | 04-06-1999 | NONE | | |
| GB 784416 | A | 09-10-1957 | NONE | | |
| US 6451553 | B1 | 17-09-2002 | NONE | | |
| WO 0105256 | A | 25-01-2001 | AT | 250869 T | 15-10-2003 |
| | | | AU | 6166400 A | 05-02-2001 |
| | | | BR | 0012510 A | 02-04-2002 |
| | | | CA | 2375987 A1 | 25-01-2001 |
| | | | DE | 60005687 D1 | 06-11-2003 |
| | | | DE | 60005687 T2 | 29-07-2004 |
| | | | EP | 1202641 A1 | 08-05-2002 |
| | | | MX | PA02000495 A | 02-07-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6288179 B

**Non-patent literature cited in the description**

- Wheat Chemistry and Technology. **HOSENEY R.C. ; WADE, P. ; FINLEY, J.W.** Wheat Chemistry and Technology. American Association of Cereal Chemists, Inc, 1988, vol. II, 430-431

- **BRAND ; MALVERN.** Mastersizer Hydro. Malvern Instruments, 2004, vol. 2000S